Europäisches Patentamt

European Patent Office

Office européen des brevets

(19)

(11) Veröffentlichungsnummer : **0 096 232**
**B1**

# EUROPÄISCHE PATENTSCHRIFT

(12)

(45) Veröffentlichungstag der Patentschrift :
**21.01.87**

(21) Anmeldenummer : **83104574.5**

(22) Anmeldetag : **10.05.83**

(51) Int. Cl.⁴ : **G 05 G   7/04**

(54) **Mechanische Schalthilfe für Synchrongetriebe.**

(30) Priorität : **27.05.82 DE 3219934**

(43) Veröffentlichungstag der Anmeldung :
**21.12.83 Patentblatt 83/51**

(45) Bekanntmachung des Hinweises auf die Patenterteilung : **21.01.87 Patentblatt 87/04**

(84) Benannte Vertragsstaaten :
**AT DE FR GB IT NL SE**

(56) Entgegenhaltungen :
**FR-A-   981 341**
**US-A- 3 693 474**
**US-A- 3 988 945**

(73) Patentinhaber : **M A N Nutzfahrzeuge GmbH**
**Dachauer Strasse 667 Postfach 50 06 20**
**D-8000 München 50 (DE)**

(72) Erfinder : **Heuer, Fritz, Ing.-grad.**
**Pertrichplatz 9**
**D-8067 Petershausen (DE)**

EP 0 096 232 B1

**Beschreibung**

Die Erfindung betrifft eine Schalteinrichtung gemäß dem Oberbegriff des Patentanspruchs.

Diese Schalteinrichtung weist eine Schalthilfe für ein Synchrongetriebe mit einem geberseitigem Schalthebel, einem nehmerseitigen Eingang des Schaltgetriebes und einem Schaltgestänge zwischen Schalthebel und Eingang des Schaltgetriebes auf.

Es ist allgemein bekannt, daß beim Schalten eines synchronisierten Getriebes bei Erreichen des Synchronpunktes bis zum Gleichlauf der miteinander zu schaltenden Getriebezahnräder die am Schalthebel aufzubringende Kraft stark ansteigt. Um den Anstieg der Schaltkraft in Grenzen zu halten, werden Schalthilfen eingesetzt.

Die bisher bekannt gewordenen Schalthilfen lösen ihre Aufgabe zufriedenstellend, andererseits handelt es sich jedoch um relativ aufwendige und demzufolge teuere Zusatzeinrichtungen.

Aufgabe der Erfindung ist es demgegenüber, das konventionelle mechanische Schaltgestänge eines Synchrongetriebes so auszugestalten, daß mit geringerem baulichen Aufwand die von Hand aufzubringende Schaltkraft verringert wird.

Diese Aufgabe wird durch die kennzeichnenden Merkmale des Patentanspruchs gelöst.

Es ist hierbei der Grundgedanke der Erfindung, die Möglichkeit einer angenähert konstanten Kraft zum Schalten des Getriebes durch eine zwangsweise oder automatische mechanische Übersetzungsänderung im Schaltmechanismus des Getriebes zu schaffen. Das zu verändernde Übersetzungsverhältnis kann dabei am Anfang des Schaltgestänges, also im Bereich des Schalthebels, am Ende des Schaltgestänges also im Bereich des Getriebeeinganges, oder zwischen den Enden des Schaltgestänges innerhalb dessen liegen.

Es ist zwar bereits ein Hebelgetriebe bekannt (US-A-3 988 945), bei welchem als Hebel das Fußbremspedal für eine hydraulische Zweikreis-Bremsanlage verwendet ist. In diesem Pedal ist eine Führungskurve ausgebildet, in welcher verschieblich das Ende einer Übertragungsstange aufsitzt. Diese wird mit ihrer Auflage durch kräftige Federn gegen das vom Schwenkpunkt des Pedals abgelegene Ende der auf bestimmte Weise gekrümmte Führungskurve gezogen. Wird nun beim Niedertreten des Bremspedals nur geringe Kraft aufgebracht, wie etwa dann, wenn eine der beiden Bremsanlagen ausgefallen ist, dann verbleibt die Übertragungsstange im beschriebenen Eingriff. Wenn eine der Bremsanlagen anspricht und eine entsprechend höhere Kraft auf das Bremspedal aufgebracht wird, dann läuft der Eingriffspunkt zwischen der Haltestange und der Führungskurve infolge der der Federkraft entgegengerichteten Kraftkomponenete der Betätigungskraft einerseits und der geometrischen Form der Führungskurve andererseits in bestimmter Weise gegen das den Schwenkpunkt des Pedales nächstgelegene Ende der Führungskurve, wodurch sich die Übersetzung des so gebildeten Hebelgetriebes verstärkt.

Die in einer Ausführungsform auch als allseitig geschlossener Kulissenschlitz ausgebildete, gekrümmte Führungskurve muß jedoch mit hoher Genauigkeit hergestellt werden. Hierbei ist zu berücksichtigen, daß beim Niedertreten des Bremspedales eine sich zunehmend verstärkende Kraft auf dieses aufgebracht wird.

Die vorliegende Erfindung verwendet das bekannte Grundprinzip, jedoch zum Betätigen einer Synchronschaltung, bei welcher während eines Schaltvorganges die aufzubringende Kraft nach Überwinden des Synchronpunktes wieder stark abfällt. Ferner ist erfindungsgemäß statt einer gekrümmten Führungskurve ein wesentlich einfacher herzustellendes, sich geradlinig erstreckendes Langloch verwendet.

Die erfindungsgemäße Schalteinrichtung weist einen etwas verlängerten Schaltweg auf, aber es ist zum Überwinden des Synchronpunktes eine deutlich niedrigere Kraft erforderlich als bei einem herkömmlichen Getriebe ohne Schalthilfe, wobei dennoch der Synchronpunkt für den Fahrer, wie es erforderlich ist, deutlich spürbar ist.

Die Erfindung wird nachfolgend anhand der in der Zeichnung dargestellten, bevorzugten Ausführungsbeispiele erläutert.

In der Zeichnung zeigen :

Figur 1 ein Diagramm zum grundsätzlichen Verständnis der Erfindung,

Figur 2 eine erste erfindungsgemäße Lösung als schematisch dargestellte Gesamtanordnung

Figuren 3, 4 den von der Erfindung wesentlich beeinflußten Teil der Anordnung gemäß Fig. 2 in zwei zueinander senkrechten Schnitten und

Figuren 5, 6 in einer Fig. 2 entsprechenden Darstellung zwei Varianten zu der Lösung gemäß Fig. 2 bis 4.

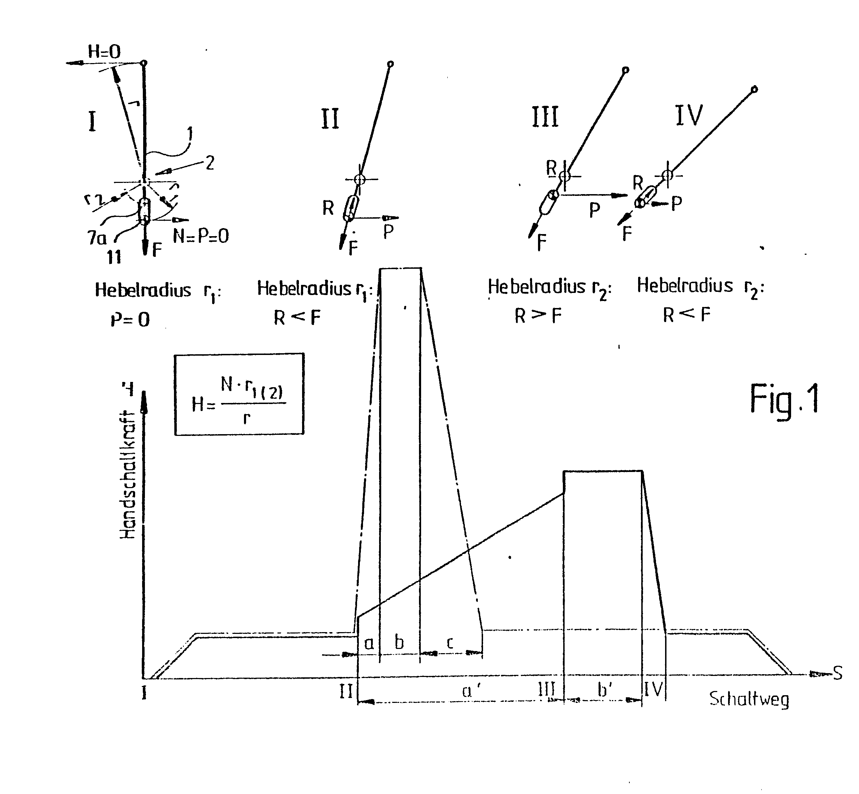

In Fig. 1 ist die während des Einrückens eines Ganges bei einem synchronisierten Getriebe vom Fahrer des mit diesem Getriebe ausgerüsteten Kraftfahrzeuges am Handschalthebel aufzubringende Handschaltkraft H über dem Schaltweg S aufgetragen. Der Strich-Punkt-Linienzug ist der Kraftverlauf ohne Einsatz einer Schalthilfe. Es ist deutlich zu erkennen, wie die Handschaltkraft im Bereich a steil ansteigt, um nach einigem Verbleiben auf dem Höchstwert im Bereich b wieder abzufallen (Bereich c). Der Bereich a bis b ist der Bereich der Annäherung an den Einrückpunkt. Dieser deutliche Kraftanstieg soll durch die Erfindung abgebaut werden. Mit Anwendung der Erfindung und der erfindungsgemäßen Übersetzungsänderung ergibt sich der Verlauf der Handschaltkraft H gemäß dem ausgezogenen Linienzug der Fig. 1. Es ist zu sehen, daß im Bereich a' die Handschaltkraft weniger steil ansteigt und im Bereich b' einen wesentlich niedrigeren Höchstwert erreicht. Hierin besteht der wesentliche Vorteil der Erfindung.

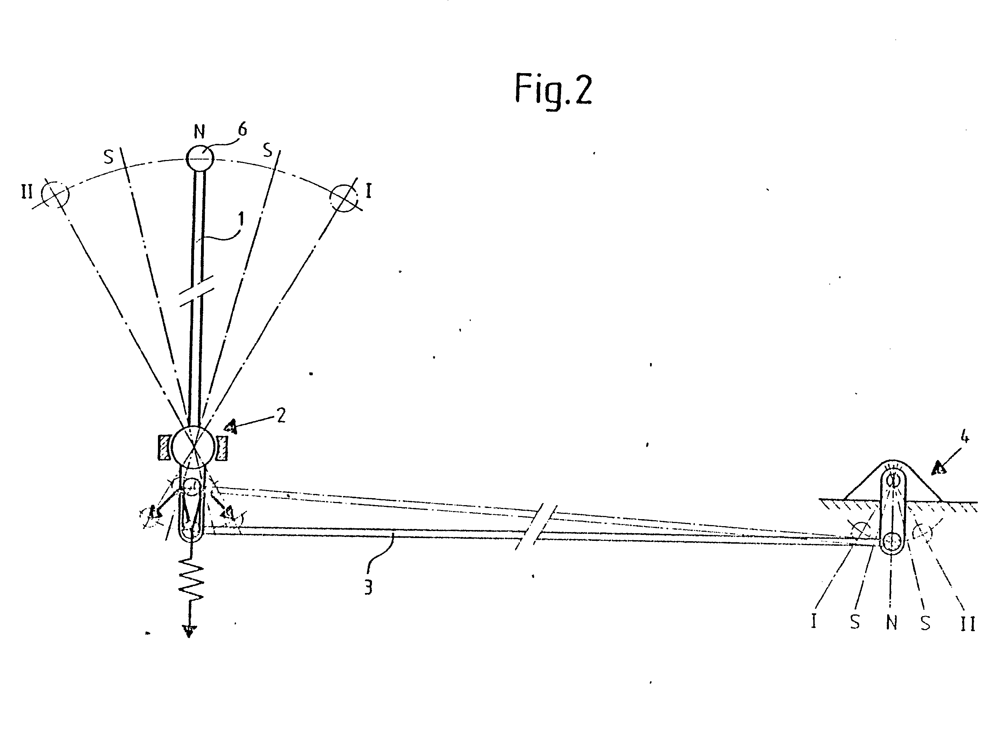

Das Umfeld der Erfindung soll zunächst anhand der Fig. 2 kurz erläutert werden. Der vom Fahrer zu bedienende Handschalthebel ist mit 1 gekennzeichnet. Der Handschalthebel 1 ist im Bereich seines unteren Endes schwenkbar gelagert (Gelenk 2) und mit dem Schaltgestänge 3 gelenkig verbunden. Das Schaltgestänge 3 führt zum Synchrongetriebe, dessen Eingang mit 4 gekennzeichnet ist. Das Gelenk 2 ist als Kugelgelenk ausgebildet, so daß der Schalthebel 1 in der Zeichenebene und senkrecht dazu zu verschwenken ist. Die entsprechenden Verstellbewegungen des Schaltgestänges 3 bewirken im Getriebe die Gassenauswahl und das Ein- bzw. Ausrücken der zu der jeweiligen Schaltgasse gehörenden Gänge.

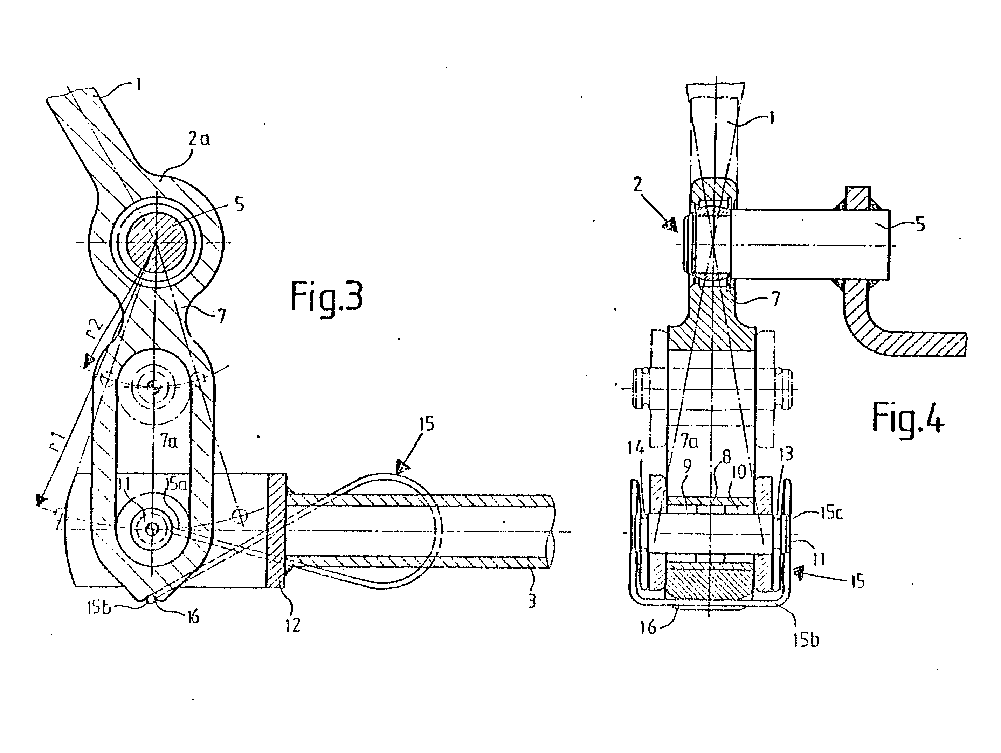

Bei der ersten Ausführungsform der Erfindung ist der Bereich des Kugelgelenkes 2 gemäß Fig. 3, 4 ausgebildet. Der Schalthebel 1 besteht aus dem längeren Teil 2a, der oberhalb des Lagerzapfens 5 des Gelenkes 2 liegt und am oberen Ende den Schalthebelknopf 6 trägt und dem kürzeren unteren Teil 7, der unterhalb des Lagerzapfens 5 liegt. Der Teil 7 um schließt ein Langloch 7a. In diesem Langloch ist eine Hülse 8 verstellbar, in der über zwei Wätzlager 9, 10 ein Lagerzapfen 11 gelagert ist. Auf den seitlich aus dem unteren Teil 7 des Schalthebels 1 herausragenden Enden des Lagerzapfens 11 ist der gabelförmig ausgebildete Kopf 12 des Schaltgestänges 3 gelagert. Seitlich davon ruht in Ringnuten 13, 14 des Lagerzapfens 11 eine Bügelfeder 15 mit ihren gebogenen Enden 15a, die mit ihrem Steg 15b in einer Nut 16 am unteren Ende des Schalthebelteiles 7 ruht.

Der Arbeitsablauf der Vorrichtung ergibt sich aus den Darstellungen, die in Fig. 1 dem für die Erfindung geltenden Kurvenverlauf (ausgezogener Linienzug) zugeordnet und mit I bis IV gekennzeichnet sind.

In der Ausgangsstellung I befindet sich der Schalthebel 1 in einer solchen Stellung, daß die Längsachse des Längsschlitzes 7a vertikal verläuft. Die zumindest weitgehend entspannte Bügelfeder 15 hält den Zapfen 11 mit der Hülse 8 am unteren Ende des Längsschlitzes 7a in Anlage. Der Radius, mit dem der Zapfen 11 um die Längsachse des Lagerzapfens 5 des Gelenkes 2 zu schwenken ist, ist mit $r_1$ bezeichnet.

Die am oberen Ende des Schalthebels 1 aufzubringende Kraft H ergibt sich aus der Beziehung.

$$H = N \cdot r_1/r$$

worin bedeuten

H = die am oberen Ende des Handschalthebels aufzubringende Handschaltkraft,

N = die vom Lagerzapfen 11 über die Hülse 8 auf die Seitenflächen des Längsschlitzes 7a aufzubringende Normalkraft,

$r_1$ = der Radius, auf dem der Lagerzapfen 11 um die Längsachse des Lagerzapfens 5 des Gelenkes 2 schwenkt und

r = der Radius, auf den das obere Ende (Schalthebelknopf 6) des Schalthebels 1 um die Längsachse des Lagerzapfens 5 des Gelenkes 2 schwenkt.

Solange die Handschaltkraft H = 0 ist, ist die Normalkraft N = 0, der Kraft F der Feder 15 wirkt keine Kraft entgegen, das System befindet sich in der Ruhestellung I.

Wird nun bei ansteigender Handhebelkraft H der Schalthebel 1 in Richtung auf die Stellung S bewegt, so erreicht das System die Stellung II und es bildet sich eine Normalkraft N mit endlichem Wert aus, die sich in das Kräftepaar P und R zerlegen läßt, wovon die Kraft R der Federkraft F entgegen wirkt. Es bleibt jedoch zunächst noch die Kraft R unter dem Wert des Federkraft F und die Hülse 8 wird zwar mit verminderter, aber immer noch ausreichender Kraft F = R in ihrer unteren Stellung gehalten.

Im weiteren Schwenken des Schalthebels 1 in die Stellung S erreicht das System die Stellung III, die Handhebelkraft beginnt mäßig anzusteigen, um dabei einen Wert zu erreichen, bei dem die Handhebelkraft zu einer Kraft N führt, die beim Zerlegen in die Kräfte R und P zu einem Wert der Kraft R führt, der die Federkraft F übersteigt, so daß der Lagerzapfen 11 in seine obere Endstellung gebracht wird, bis er mit der Hülse 8 am oberen Ende des Längsschlitzes 7a anliegt. Durch die Lagerung der Hülse 8 über die Wälzlager 9, 10 auf dem Lagerzapfen 11 ist diese Verstellbewegung möglich, ohne daß größere Reibungskräfte überwunden werden müßten. Die für den weiteren Schaltvorgang des Getriebes erforderliche Handschaltkraft H ergibt sich aus

$$H = N \cdot r_2/r$$

worin $r_2$ der Radius ist, auf dem nunmehr der Lagerzapfen 11 um die Längsachse des Lagerzapfens 5 des Gelenkes 2 geschwenkt wird, während N und r die oben erläuterten Begriffe sind.

Im weiteren Verstellen auf die Stellung IV des Systemes wird die Kraft R wieder kleiner als die Federkraft F und die Feder 15 vermag den Lagerzapfen wieder in seine untere Ausgangsstellung zurückzubringen.

Ersichtlich wird gegenüber dem System ohne Schalthilfe der Schaltweg verlängert, in entsprechendem Maße aber die notwendige Schaltkraft deutlich verringert, die Veränderung der Schaltkraft über den Schaltweg ist wesentlich weniger ausgeprägt als bei einer Lösung ohne erfindungsgemäße Schalthilfe.

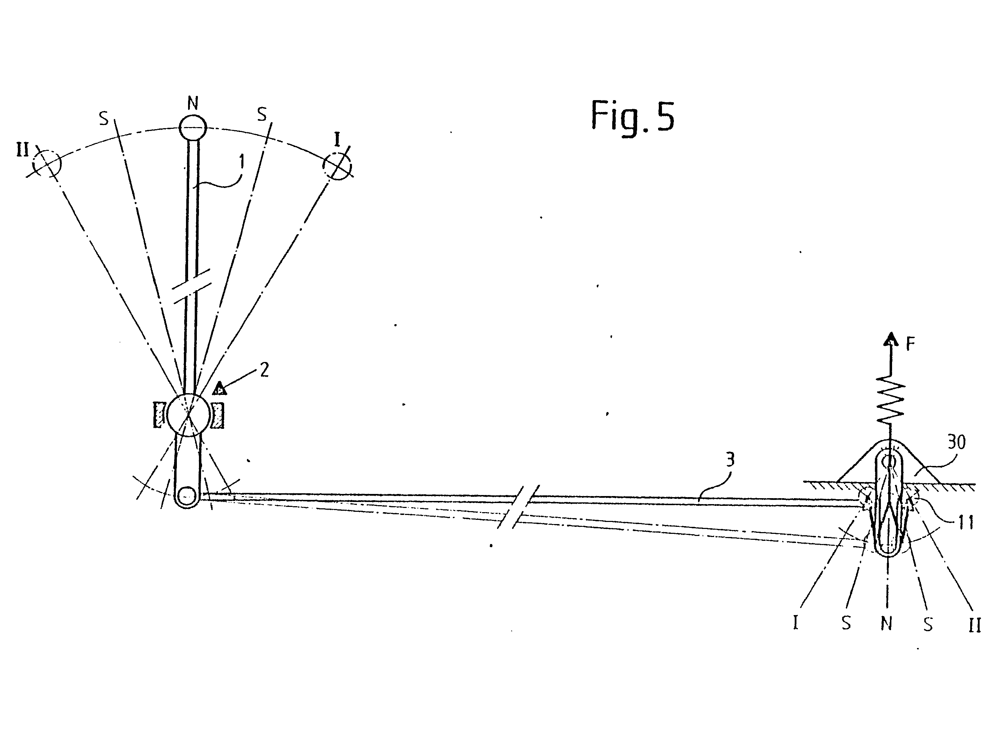

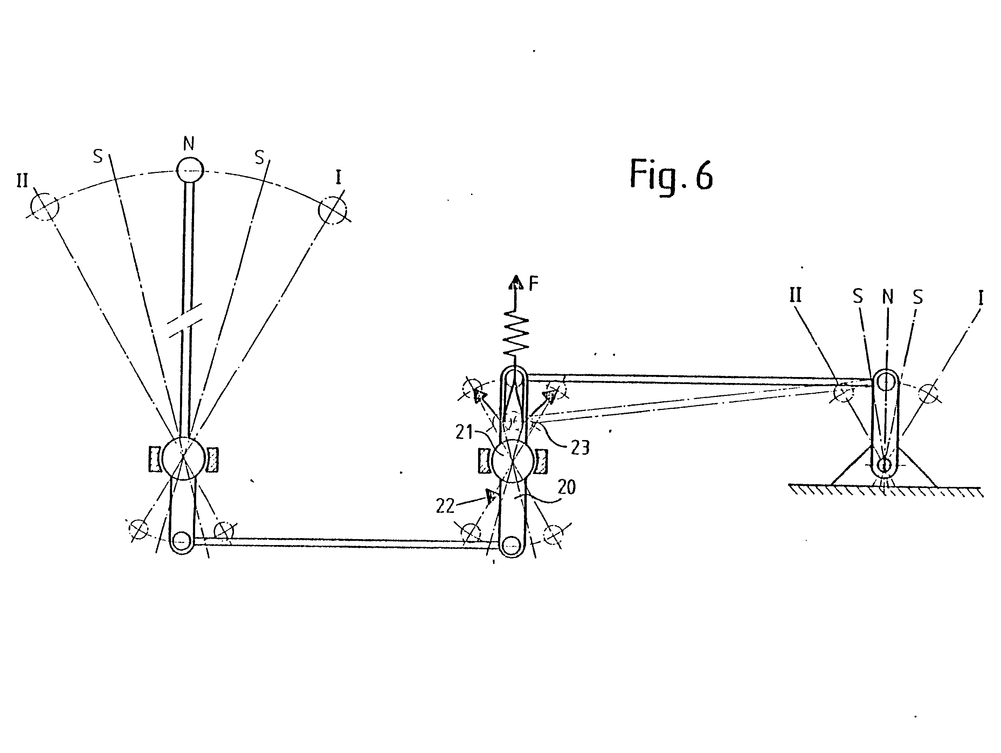

Die erfindungsgemäße Schalteinrichtung kann nun, wie oben erläutert, auf der Geberseite des Schaltgestänges 3 angeordnet werden (Fig. 2 bis 4). Mit den gleichen Ergebnis kann die Schalthilfe aber auch auf der Nehmerseite des Schaltgestänges 3 vorgesehen werden (Fig. 5) oder sie kann in das Schaltgestänge 3 selbst integriert werden (Fig. 6). Beide Varianten bedürfen keiner besonderen Erläuterung, die Unterschiede zu der ersten Lösung ergeben sich aus der Zeichnung selbst. Welcher der drei Varianten der Vorzug gegeben wird, ergibt sich aus den Gegebenheiten des Einzelfalles, insbesondere den baulichen Gegebenheiten im Umfeld der Erfindung.

Bei der Lösung gemäß Fig. 6 wird das Verhältnis zwischen dem in seiner Länge unveränderlichen Teil 20 des bei 21 schwenkbar gelagerten zweiarmigen Hebels 22 und dessen veränderlichem Teil 23 verändert. Funktionell entspricht also der Hebelteil 20 dem über dem Gelenk 2 liegenden Teil des Schalthebels 1, während der Hebelteil 22 so ausgestaltet ist, wie es bei der Lösung gemäß Fig. 2 bis 4 der Teil des Schalthebels 1 ist, der unterhalb des Lagerzapfen 5 liegt. Bei der Lösung nach Fig. 5 ist der Hebel 30 als einarmiger Hebel ausgebildet, dessen wirksame Länge jedoch veränderlich ist, indem er analog zu dem bei der Lösung nach Fig 2 bis 4 unterhalb des Lagerzapfens 11 liegenden Teil des Schalthebels 1 ausgebildet ist. Das Schaltgestänge wirkt also nehmerseitig an einem unterschiedlich langem Hebelarm auf das Eingangsglied des Schaltgetriebes.

## Patentanspruch

Schalteinrichtung für ein Kraftfahrzeug, mit einem Hebelgetriebe, mit einem nahe einem seiner Enden schwenkbar gelagerten Hebel (1), dessen vom Schwenkpunkt ferngelegenes Ende (6) zur Betätigung durch den Fahrer eingerichtet ist, während das andere Ende des Hebels gelenkig mit einer Übertragungsstange (3) verbunden ist, welche auf ein Fahrzeugaggregat zu dessen Betrieb einwirkt, wobei an einer Schwenkverbindung des Hebelgetriebes der Angriffspunkt eines der schwenkbar verbundenen Teile am anderen Teil gegen die Wirkung einer Feder (15) in Richtung einer größeren Übersetzungswirkung verstellbar angeordnet ist und in einem Teil einer Führung (7a) ausgebildet ist, und wobei die Federkraft der Feder so bemessen ist, daß nach Überschreiten einer bestimmten Betätigungskraft die Schwenkverbindung zum Vergrößern der Übersetzungswirkung längs der Führung (7a) abläuft, dadurch gekennzeichnet, daß

das Hebelgetriebe als Kurbelgetriebe ausgebildet ist, dessen eine dem Hebel bildende Kurbel von einem Gangschalthebel (1) gebildet ist, während die andere Kurbel vom Eingang (4) eines Synchrongetriebes gebildet ist, daß die Enden beider Kurbeln mit der Übertragungsstange (3) verbunden sind, und

die verstellbare Schwenkverbindung am Schalthebel (1), am Getriebeeingang (4) oder an einem die Übertragungsstange (3) teilenden Schwenk-Übertragungshebel (22) angeordnet ist, und

die Führung als sich geradlinig erstreckendes Langloch (7a) ausgebildet ist.

## Claim

A gear shift device for a motor vehicle comprising linkage having pivotally mounted near one of its ends a lever (1) whose end (6) remote from the pivot point is adapted for operation by the driver, the other end of the lever being pivotally connected to a transmission rod (3) acting on a unit of the vehicle in order to operate such unit, the linkage comprising a pivoted connection in which the place where one of the pivotally connected parts is engaged with the other such part is adjustable towards an increased step-up against the force of a spring (15) and is formed in a part of a guide (7a), the resilience of the spring (15) being such that after a predetermined actuating force has been exceeded the pivoted connection moves along the guide (7a) to increase the step-up, characterised in that :

The linkage is a crank linkage, one crank of which is operative as the lever and takes the form of a gear shift lever (1) while the other crank is the input (4) of a synchronous gearbox ;

The ends of both cranks are connected to the transmission rod (3) ; the adjustable pivoted connection is disposed on the shift lever (1) or at the gearbox input (4) or on a pivoting-transmitting lever (22) which divides the transmission rod (3), and

The guide is an elongate straight slot (7a).

## Revendication

Dispositif de manœuvre pour un véhicule automobile, avec un mécanisme à leviers, avec un levier (1) monté à pivot près de l'une de ses extrémités, dont l'extrémité (6) éloignée du point de pivotement est agencée pour être actionnée par le chauffeur, tandis que l'autre extrémité du levier est reliée par articulation à une tringle de transmission (3) qui agit sur un groupe du véhicule pour le faire fonctionner, le point d'attaque de l'un des éléments montés à pivot en une liaison par articulation du mécanisme à levier étant disposé sur l'autre élément pour être réglable, contre l'action d'un ressort (15), dans le sens d'un plus grand rapport de transmission et étant réalisé dans une partie d'un guidage (7a), la force élastique du ressort étant déterminée pour qu'après le dépassement d'une force de manœuvre déterminée, la liaison par articulation se déplace le long du guidage pour augmenter le rapport de transmission, caractérisé en ce que :

le mécanisme à leviers est réalisé en tant que mécanisme à manivelles dont une manivelle constituant le levier est formée par un levier de changement de vitesse (1) tandis que l'autre manivelle est formée par l'entrée (4) d'une boîte de vitesses synchrone, en ce que les extrémités des deux manivelles sont reliées à la tringle de transmission (3) et

la liaison par articulation réglable est disposée sur le levier de changement de vitesse (1), sur l'entrée (4) de la boîte de vitesses ou sur un levier de transmission pivotant (22) divisant la tringle de transmission (3), et

le guidage est réalisé sous forme d'évidement allongé (7a) s'étendant en ligne droite.

0 096 232

Hebelradius $r_1$:
P = 0

Hebelradius $r_1$:
R < F

Hebelradius $r_2$:
R > F

Hebelradius $r_2$:
R < F

$$H = \frac{N \cdot r_{1(2)}}{r}$$

Fig. 1

Handschaltkraft

Schaltweg

Fig.2

Fig.4

Fig.3

3

Fig. 5

Fig. 6